# EUROPÄISCHE PATENTSCHRIFT

(11) **EP 2 160 229 B1**
(45) Veröffentlichungstag und Bekanntmachung des Hinweises auf die Patenterteilung: **08.06.2011**
(21) Anmeldenummer: 08735091.4
(22) Anmeldetag: 08.04.2008
(51) Int. Cl.: B01D 39/16, B01J 20/20

(54) **MATTENFÖRMIGES SCHAUMSTOFFMATERIAL ZUR LUFTREINIGUNG UND/ODER LUFTFILTRATION**
MAT-SHAPED FOAM MATERIAL FOR CLEANING AND/OR FILTERING AIR
MATÉRIAU DE MOUSSE EN FORME DE NATTE DESTINÉ À L'ÉPURATION ET/OU AU FILTRAGE DE L'AIR

(30) Priorität: 08.06.2007 DE 102007027026
(43) Veröffentlichungstag der Anmeldung: 10.03.2010
(73) Patentinhaber: Blücher GmbH, 40699 Erkrath (DE)
(72) Erfinder: VON BLÜCHER, Hasso, 40699 Erkrath (DE); KAHROM, Kami, Klaus, 64390 Erzhausen (DE)
(74) Vertreter: Gesthuysen, von Rohr & Eggert
(86) Internationale Anmeldenummer: PCT/EP2008/002773
(87) Internationale Veröffentlichungsnummer: WO 2008/148439

(56) Entgegenhaltungen:
- DE-A1- 19 521 666
- DE-A1- 19 521 680
- DE-A1- 19 534 113
- DE-C1- 3 719 418
- GB-A- 2 013 102
- US-A- 4 190 696

## Beschreibung

Die vorliegende Erfindung betrifft das Gebiet der Luftreinigung und/oder Luftfiltration. Insbesondere betrifft die vorliegende Erfindung mattenförmige Schaumstoffinaterialien mit adsorptiven Eigenschaften sowie deren Verwendung. Die vorliegende Erfindung betrifft insbesondere ein mattenförmiges Schaumstoffmaterial nach dem Oberbegriff von Anspruch 1 und dessen Verwendung.

Aufgrund eines steigenden Umweltbewußtseins einerseits, aber auch infolge hochempfindlicher Analysenmethoden andererseits rückt die Belastung unserer Umgebung bzw. Umwelt durch Schad- und Geruchsstoffe immer mehr ins Licht der Öffentlichkeit. So besteht beispielsweise für den Bereich schad- und/oder geruchsstoffbelasteter Gebäude ein gesteigerter Bedarf, diese mit möglichst wenig Aufwand von Schad- und/oder Geruchsstoffen zu befreien und erforderlichenfalls zu sanieren. Weiterhin besteht ein Bedarf, das Raumklima bzw. die Raumluft in schad- und/oder geruchsstoffbelasteten Räumen entsprechend zu verbessern.

Im Rahmen der vorliegenden Erfindung werden als Schadstoffe insbesondere solche Stoffe bezeichnet, die bereits in geringer Menge beim Menschen Irritationen, Allergien oder Krankheiten auslösen können. Hierzu zählen beispielsweise Holzschutzmittel, wie Pentachlorphenol (PCP) und Lindan, Weichmacher, wie polychlorierte Biphenyle (PCB), die sogenannten VOC oder aber auch Formaldehyd. So wurde beispielsweise Formaldehyd in Spanplatten eingesetzt und ist mittlerweile als karzinogen eingestuft. Auch können Kohlenwasserstoffe, die gegebenenfalls aromatisch sind, bzw. deren chlorierte Derivate als Schadstoffe im Sinne der vorliegenden Erfindung beispielsweise aus Lacken, Anstrichen, Klebstoffen oder dergleichen entweichen.

Wie zuvor erwähnt, zählen auch flüchtige organische Substanzen, meist als sogenannte VOC (= volatile organic compounds) bezeichnet, zu den Schadstoffen im Sinne der vorliegenden Erfindung, welche das Raumklima oder die Umgebungsluft mehr oder minder stark belasten können. Gemäß Definition der Weltgesundheitsorganisation sind VOC organische Substanzen mit einem Siedebereich im allgemeinen von 60 bis 250 °C; zu den VOC zählen z. B. Verbindungen der Stoffgruppen Alkane und Alkene, Aromaten, Terpene, Halogenkohlenwasserstoffe, Ester, Aldehyde und Ketone. Es gibt eine Vielzahl von natürlich vorkommenden VOC, die zum Teil auch in erheblichen Mengen in die Atmosphäre abgegeben werden, so z. B. Terpene und Isoprene aus Wäldern. Die durch menschliche Aktivitäten verursachte Umweltbelastung durch VOC ist jedoch im letzten Jahrhundert stark angestiegen. Den größten Anteil daran hat der Verkehr, aber schon an zweiter Stelle steht der Bausektor mit den bauchemischen Produkten, wie z. B. Anstrichstoffen, Klebstoffen, Dichtungsmassen oder dergleichen. Mögliche Quellen von VOC in Innenräumen sind neben den Baustoffen aber auch Einrichtungsgegenstände, Reinigungs- und Pflegemittel, Hobby- und Heimwerkerprodukte, Bürochemikalien, Tabakrauch, Teppichböden etc. Das Gefährdungspotential durch diese Stoffgruppe ist sehr unterschiedlich, da es sich um eine Vielzahl ganz verschiedener Stoffe handelt, die dementsprechend auch ganz unterschiedliche Wirkungen auf die Gesundheit haben können. Mit folgenden Aussagen kann die VOC-Problematik aber umrissen werden: Zu den VOC gehören einige Verbindungen, die als hochgiftig bzw. sogar als krebserregend eingestuft sind, so z. B. Benzol. Auch für typische Symptome des sogenannten "Sickbuilding-Syndroms", wie trockene Schleimhäute der Augen, der Nase und des Rachens, werden VOC verantwortlich gemacht. Außerdem werden Nasenlaufen, Augentränen, Juckreiz, Müdigkeit, Kopfschmerzen, eingeschränkte geistige Leistungsfähigkeit, erhöhte Infektionsanfälligkeit sowie unangenehme Gerüche und Geschmackswahrnehmungen im Zusammenhang mit einer erhöhten VOC-Belastung beobachtet.

Besonders problematische Schadstoffe sind auch die vorgenannten PCB, die beispielsweise als Weichmacher in Fugendichtungsmassen, insbesondere bei der Errichtung von Bauten aus Fertigelementen, eingesetzt wurden. Neuere Erkenntnisse haben gezeigt, daß PCB im Laufe der Zeit aus Dichtungsmassen sowohl in die angrenzenden Betonelemente diffundieren als auch von den Fugendichtungen in die Umgebungsluft abgegeben werden können. Über den Luftaustausch wird dann die mit PCB belastete Luft über das gesamte Gebäude verteilt. Das so von den Fugenabdichtungen freigesetzte PCB schlägt sich in den Räumen teilweise partikelgebunden nieder, löst sich zu einem großen Teil aber auch in Wandfarben und Kunststoffen, was dazu führt, daß nach einiger Zeit der Freisetzung eine Reihe von sogenannten sekundären Emissionsquellen gebildet werden, wobei hier insbesondere gestrichene Wand- und Deckenflächen zu nennen sind. Diese Sekundärquellen enthalten dann im allgemeinen eine derart große Menge an PCB, daß sie eine große Emissionsfläche darstellen, so daß ein alleiniges Entfernen der Fugenabdichtungen kein Absinken der PCB-Konzentrationen in der Raumluft unter die vorgeschriebenen Werte bewirken kann.

Wie zuvor erwähnt, können eine weitere Quelle von Schad- und/oder Geruchsstoffen beispielsweise Teppichböden darstellen. Die Emissionen entstehen z. B. dadurch, daß Ausgangsstoffe dieser Produkte unter dem Einfluß von Feuchtigkeit und/oder unter dem Einfluß von Bestandteilen der Untergrundmaterialien reagieren, so daß der Boden selbst nach dem Entfernen des Bodenbelags weiter Geruchs- und/oder Schadstoffe emittiert, so daß entweder der gesamte Fußboden entfernt oder aber ein Zwischenboden mit Hinterlüftung verlegt werden muß.

Eine weitere Emissionsquelle für unangenehme, manchmal auch gesundheitsschädliche Emissionen sind Zusätze zum Baumaterial selbst. Beispielsweise sind viele Gebäude von Ammoniakausdünstungen betroffen, die auf die Verwendung von Ammoniumsalzen, Harnstoffen oder organischen Aminen im weitesten Sinne als Frostschutzmittel für Beton und Mörtel zurückzuführen sind. Des weiteren ist als Ursache für die Ausdünstung von Aminen bisweilen auch eine vormalige Nutzung eines Raumes (z. B. zu Zwecken der Tierhaltung) zu nennen, welche dazu führt, daß Bauelemente über einen längeren Zeitraum mit den Schadstoffen aus der Luft beaufschlagt werden. Selbst bei einem Entfernen der Primäremissionsquellen dieser Substanzen, etwa bei einer Umwidmung eines Stallgebäudes zu einem Wohn- oder Geschäftsraum, werden dann diese Schad- und/oder Geruchsstoffe von den Sekundärquellen, nämlich Wand- und Deckenflächen, weiter emittiert.

Aber auch relativ harmlose, da nicht unbedingt gesundheitsgefährdende Gerüche können bisweilen das Raumklima belasten, beispielsweise die aus Abfallbehältnissen, Toiletten, Abflüssen oder dergleichen austretenden unangenehmen Gerüche bzw. Geruchsstoffe.

Es hat im Stand der Technik nicht an Versuchen gefehlt, die Schadstoffe und Geruchsstoffe der zuvor beschriebenen Art zu entfernen. Zumeist sind die aus dem Stand der Technik zu diesem Zweck bekannten Methoden wenig leistungsstark bzw. wenig effizient oder aber lösen das betreffende Problem nur unvollständig. Viele Methoden und die hierfür eingesetzten Materialien sind zudem im Hinblick auf ihr Anwendungsspektrum nicht universell, insbesondere meist nur für einen sehr speziellen Einsatzzweck, einsetzbar.

So ist in der DE 40 28 434 A1 eine Möglichkeit zur Entfernung von PCB emittierenden Schadstoffquellen in Form von PCB-belasteten Fugendichtmassen vorgesehen, wobei durch geeignete Maßnahmen die Dichtungsmasse, d. h. nur die Primärquelle, herausgeschnitten und entsorgt wird. Das Verfahren greift damit aber lediglich auf die Primärquellen zu, so daß eine Dekontaminierung der Sekundärquellen unberücksichtigt bleibt.

Weiter ist aus der DE 38 18 993 A1 ein Verfahren zur Sanierung schadstoffbelasteter Räume bekannt, bei dem die schadstoffbelastete Raumluft dadurch gereinigt wird, daß durch geeignete Maßnahmen Luft an Adsorbentien künstlich oder nur durch Eigenzirkulation vorbeigeführt wird. Beispielsweise wird die schadstoffbelastete Luft durch mit Adsorbentien beschickte Adsorptionstürme gepreßt. Eine andere dort beschriebene Möglichkeit besteht darin, die Luft an großflächigen, mit Adsorbentien beladenen Flächengebilden, wie beispielsweise Vorhängen, vorbeizuführen. Dieses Verfahren hat den entscheidenden Nachteil, lediglich auf die bereits belastete Raumluft zurückzugreifen, welche sich immer wieder mit der schadstoffbelasteten Luft vermischt, so daß allenfalls ein Verdünnungseffekt erzielt wird.

Weiterhin sind textile, mit Adsorbentien beaufschlagte, im allgemeinen mit einer wasserundurchlässigen, aber wasserdampfdurchlässigen Beschichtung versehene Flächenmaterialien bekannt, welche in Abhängigkeit von der Schadstoffquelle als Tapete, Bodenbelag oder dergleichen ausgebildet sind und über die entsprechenden Schad- und/oder Geruchsstoffe emittierenden Quellen aufgebracht werden (vgl. z. B. DE 44 32 834 A1, DE 44 47 844 C2, DE 196 07 423 A1 und DE 200 08 162 U1). Die dort beschriebenen Materialien eignen sich aber nicht als Wand-, Boden- oder Deckenelemente.

Des weiteren sind aus der WO 2005/026465 A2 Baumaterialien für den Innenausbau auf Basis von Gipsbauplatten, wie beispielsweise Gipskartonplatten und Gipsfaserplatten, bekannt, welche Zeolithe in Mengen von 1 bis 25 Gew.-% enthalten und dazu bestimmt sind, Luftschadstoffe in Innenräumen, wie Formaldehyde, Ammoniak, Tabakrauch etc., zu reduzieren. Die dort eingesetzten Zeolithe liefern aber nicht immer das gewünschte Ergebnis, insbesondere aufgrund ihres nicht immer ausreichenden Vermögens, Schad- und/oder Geruchsstoffe aus der Umgebungsluft abzubauen oder zu sorbieren. Da die Zeolithe bei der Herstellung der Gipsplatten in die Gipsmasse eingerührt werden, ist zudem ein großer Teil ihrer Oberfläche nicht für die aufzunehmenden bzw. zu zersetzenden Schad- und Geruchsstoffe frei zugänglich, so daß die Schad- und Geruchsstoffe durch die Gipsmasse hindurch zu den hierin eingelagerten Zeolithen diffundieren müssen. Aus den vorgenannten Gründen müssen relativ große Mengen an Zeolithen eingesetzt werden, was aber die Baumaterialien als solche, insbesondere im Hinblick auf ihren Verbund oder ihre Stabilität, beeinträchtigen kann.

Das Dokument DE 195 21 666 A1 beschreibt ein mattenförmiges Schaumstoffmaterial, welches einen gasdurchlässigen, mattenförmigen dreidimensionalen Träger umfasst, der als offenzelliger oder offenporiger Schaum ausgebildet ist wobei dieser Träger diskrete, fixierte Sorptionspartikel aus Aktivkohle aufweist.

Das der vorliegenden Erfindung zugrundeliegende Problem liegt daher insbesondere in der Bereitstellung von möglichst universell einsetzbaren Materialien mit adsorptiven Eigenschaften im Hinblick auf Geruchs- und/oder Schadstoffe, welche die zuvor geschilderten Nachteile des Standes der Technik zumindest weitgehend vermeiden oder aber wenigstens abschwächen sollen.

Insbesondere sollen Materialien auf Basis insbesondere mattenförmiger Schaum(stoff)materialien mit adsorptiven Eigenschaften bereitgestellt werden, welche eine möglichst universelle und/oder effiziente Verwendbarkeit im Hinblick auf eine Reduktion von Geruchs- und/oder Schadstoffen aus der Umgebungsluft ermöglichen sollen.

Die Anmelderin hat nun überraschenderweise herausgefunden, daß das zuvor geschilderte Problem dadurch gelöst werden kann, daß man ein mattenförmiges Schaumstoffmaterial, welches sich insbesondere zu Zwecken der Luftreinigung und/oder Luftfiltration, vorzugsweise zum Einbau in Decken und Dekkensysteme, Wände und Wandsysteme, Klimatisierungseinrichtungen, Lüftungsschächte, als Baumaterial oder dergleichen, eignet, derart ausgestaltet, daß das Schaumstoffmaterial einen gasdurchlässigen, insbesondere luftdurchlässigen, mattenförmigen dreidimensionalen Träger nach Anspruch 1 umfaßt.

Zur Lösung des zuvor geschilderten Problems schlägt die vorliegende Erfindung somit gemäß einem ersten Aspekt der vorliegenden Erfindung ein insbesondere mattenförmiges Schaum(stoff)material nach Anspruch 1 vor. Weitere, vorteilhafte Ausgestaltungen sind Gegenstand der diesbezüglichen Unteransprüche.

Des weiteren schlägt die vorliegende Erfindung gemäß einem weiteren, zweiten Aspekt der vorliegenden Erfindung die Verwendung des erfindungsgemäßen mattenförmigen Schaum(stoff)materials nach Anspruch 14 und 15 vor.

Gegenstand der vorliegenden Erfindung - gemäß einem **ersten** Aspekt der vorliegenden Erfindung - ist somit eine mattenförmiges Schaumstoffmaterial, welches insbesondere zu Zwecken der Luftreinigung und/oder Luftfiltration, vorzugsweise zum Einbau in Decken und Deckensysteme, Wände und Wandsysteme, Klimatisierungseinrichtungen, Lüftungsschächte, als Baumaterial oder dergleichen, geeignet ist, wobei das Schaumstoffmaterial einen gasdurchlässigen, insbesondere luftdurchlässigen, dreidimensionalen Träger umfaßt, wobei der Träger als offenzelliger oder offenporiger Schaum, insbesondere Schaumstoff, ausgebildet ist, und wobei in den Träger ein geruchs- und/oder schadstoffsorbierendes Material aufgenommen und/oder vorgesehen ist, wobei das geruchs- und/oder schadstoffsorbierende Material als geruchs- und/oder schadstoffsorbierendes, insbesondere geruchs- und/oder schadstoffadsorbierendes Sorptionsmittel auf Basis konkreter Sorptionspartikel ausgebildet ist, wobei die Sorptionspartikel an dem Träger, insbesondere an den Wandungen der Zellen oder Poren des Schaums, insbesondere Schaumstoffs, fixiert sind.

Wie zuvor beschrieben, ist eine Besonderheit der vorliegenden Erfindung darin zu sehen, daß eine Trägerstruktur auf Basis eines Schaums verwendet wird, der mit den Sorptionspartikel beladen ist. Unter dem Begriff des Schaums wird im Rahmen der vorliegenden Erfindung insbesondere ein Gebilde aus im Gebrauchszustand gas- bzw. luftgefüllten, kugel- oder polyederförmigen Zellen, welche durch feste Zellstege begrenzt und voneinander getrennt werden, bezeichnet. Die Zellstege, welche selbst über sogenannte Knotenpunkte verbunden sind, bilden dabei ein zusammenhängendes Gerüst. Zwischen den Zellstegen können sich sogenannte Schaumlamellen spannen, die im Fall von offenzelligen bzw. offenporigen Schäumen zumindest teilweise zerstört sind. Für weitergehende Einzelheiten zum Begriff des Schaums kann beispielsweise verwiesen werden auf Römpp Chemielexikon, 10. Auflage, Georg Thieme Verlag, Stuttgart/New York, Stichwort "Schaum", sowie die dort referierte Literatur, wobei der gesamte Offenbarungsgehalt der vorgenannten Literaturstellen hiermit durch Bezugnahme eingeschlossen ist.

Im Rahmen der vorliegenden Erfindung wird als Träger ein offenzelliger oder offenporiger Schaum bzw. Schaumstoff verwendet.

Unter dem Begriff des Schaumstoffs werden erfindungsgemäß insbesondere Werkstoffe mit über ihre ganze Masse verteilten, im Fall der vorliegenden Erfindung offenen Zellen bzw. Poren mit einer Rohdichte, die niedriger ist als die der Gerüst- bzw. Schaumsubstanz, verstanden. Als Gerüstsubstanz fungieren im allgemeinen organische Polymere (z. B. Schaumkunststoffe).

Die Schaumstoffe können dabei nach DIN 7726 (Mai 1982) in Hartschaumstoffe, halbharte Schaumstoffe, Weichschaumstoffe, elastische Schaumstoffe und weichelastische Schaumstoffe in Abhängigkeit ihres Verformungswiderstand bei Druckbelastung unterteilt werden: Elastische Schaumstoffe sind solche, die bei Druckverformung nach DIN 53580 bis zu 50 % ihrer Dicke keine verbleibende Verformung von mehr als 2 % ihres Ausgangsvolumen aufweisen, wohingegen Hartschaumstoffe nach DIN 7726 (Mai 1982) Schaumstoffe sind, die bei einer Verformung unter Druckbelastung einen relativ hohen Widerstand entgegensetzen (Druckspannung bei 10 % Stauchung bzw. Druckfestigkeit nach DIN 53421, Juni 1984, ≥ 80 kPa).

Weitere Einteilungen der Schaumstoffe erfolgen unter anderem nach der Gerüstsubstanz (z. B. Polyurethanschäume, Polystyrolschäume, Polyolefinschäume, Polyvinylchloridschäume etc.), der Werkstoffklasse der Gerüstsubstanz (z. B. elastomere Schaumstoffe, thermoelastomere Schaumstoffe, thermoplastische Schaumstoffe etc.), der Art, der Größe und der Form der Schaumstoffzellen (z. B. offenzellige Schaumstoffe, gemischtzellige Schaumstoffe, grob- und feinzellige Schaumstoffe, Kugelschaumstoffe, Wabenschaumstoffe, doppelschichtige bzw. echte Schaumstoffe, einschichtige bzw. unechte Schaumstoffe etc.), nach der Dichte (z. B. leichte Schaumstoffe mit Dichten ≤ 100 kg/m³ und schwere Schaumstoffe mit Dichten ≥ 100 kg/m³) oder Dichteverteilung (z. B. Struktur- oder Integralschaumstoffe etc.).

Für weitergehende Einzelheiten zu dem Begriff des Schaumstoffs kann beispielsweise verwiesen werden auf Römpp Chemielexikon, 10. Auflage, Georg Thieme Verlag, Stuttgart/New York, Stichwort: "Schaumstoffe", "Hartschaumstoffe", "Weichschaumstoffe", "Integralschaumstoffe" und "Schaum", sowie die dort jeweils referierte Literatur, wobei der gesamte Offenbarungsgehalt der vorgenannten Literaturstellen hiermit durch Bezugnahme eingeschlossen ist.

Gemäß einer erfindungsgemäß bevorzugten Ausführungsform wird als Träger ein offenporiger und/oder ein offenzelliger Schaum, insbesondere Schaumstoff, auf Basis mindestens eines organischen Polymers, insbesondere auf Basis von Polyurethanen, Polyolefinen, Polystyrolen, Polyvinylchloriden, Polyisocyanuraten und Formaldehydharzen, besonders bevorzugt ein Polyurethanschaumstoff, eingesetzt. Erfindungsgemäß bevorzugt ist ein offenporiger und/oder ein offenzelliger Schaum, insbesondere Schaumstoff, mit einem mittleren Porendurchmesser von 1 bis 5 mm, bevorzugt 1,5 bis 3 mm (sogenannter großporiger oder grobzelliger Schaum bzw. Schaumstoff), da auf diese Weise sowohl eine gute Luftdurchlässigkeit und somit ein hoher Filtrationsdurchsatz als auch eine gute Beladbarkeit bzw. Beladungsfähigkeit mit den Sorptionspartikeln erreicht wird. Erfindungsgemäß bevorzugt ist ein offenporiger und/oder offenzelliger Schaum, insbesondere Schaumstoff, mit einer Dichte ≤ 100 kg/m³.

Gemäß einer erfindungsgemäß besonders bevorzugten Ausführungsform ist der Träger ein offenporiger und/oder offenzelliger Schaumstoff auf Polyurethanbasis oder Polyolefinbasis (d. h. ein offenporiger und/oder offenzelliger PU-Schaumstoff oder PO-Basis), insbesondere ein vorzugsweise großporiger retikulierter Polyurethanschaumstoff (vorzugsweise mit einem Porendurchmesser von 1 bis 5 mm, bevorzugt 1,5 bis 3 mm) und/oder vorzugsweise mit einer Dichte ≤ 100 kg/m³.

Gemäß einer erfindungsgemäß bevorzugten Ausführungsform, weist der Träger, insbesondere Schaum oder Schaumstoff, eine Porigkeit (Porosität) von 5 bis 50 ppi (= pores per inch), insbesondere 10 bis 30 ppi, auf.

Im Rahmen der vorliegenden Erfindung ist der Träger, insbesondere Schaum oder Schaumstoff, üblicherweise flach ausgebildet. Im allgemeinen weist der Träger, insbesondere Schaum oder Schaumstoff, eine Dicke von 1 bis 40 mm, insbesondere 5 bis 30 mm, vorzugsweise 10 bis 25 mm auf.

Vorteilhafterweise ist der Träger selbsttragend ausgebildet. Im allgemeinen werden solche Materialien eingesetzt, die dazu führen, daß der Träger thermisch beständig ausgebildet ist, insbesondere bis mindestens 80 °C, vorzugsweise bis mindestens 100 °C, besonders bevorzugt bis mindestens 120 °C.

Gemäß einer erfindungsgemäß besonders bevorzugten Ausführungsform ist der Träger, insbesondere Schaum oder Schaumstoff, versteift und/oder ausgehärtet, vorzugsweise durch insbesondere thermische und/oder chemische Aushärtung. Alternativ kann auch ein Hartschaumstoff im Sinne von DIN 7726 (Mai 1982) zur Anwendung kommen.

Gemäß einer erfindungsgemäß besonders bevorzugten Ausführungsform wird der Träger, insbesondere Schaum oder Schaumstoff, zu diesem Zweck zunächst mit einem chemischen Aushärtungsmittel getränkt und nachfolgend ausgehärtet, wobei das Aushärtungsmittel beispielsweise ein Klebstoff (z. B. ein chemisch aushärtender bzw. chemisch vernetzender Klebstoff) oder eine anderweitige sein kann, wobei das Aushärtungsmittel in diesem Fall gleichermaßen zur Fixierung der Sorptionspartikel an dem Träger dienen kann. Die Aushärtung führt dazu, daß der Schaum- bzw. Schaumstoff gegenüber seinem Ursprungszustand nicht bzw. zumindest im wesentlichen nicht mehr reversibel verformbar ist.

Üblicherweise sind die Sorptionspartikel mittels einer Haftmasse, insbesondere mittels eines Klebstoffs, an dem Träger fixiert. Wie zuvor beschrieben, kann vorteilhafterweise die Haftmasse bzw. der Klebstoff für die Fixierung der Sorptionspartikel an dem Träger gleichzeitig das Aushärtungsmittel für den Träger sein.

Was die Beladungsmenge an geruchs- und/oder schadstoffsorbierendem Material anbelangt, so ist diese Beladungsmenge üblicherweise derart ausgelegt, daß die durch das geruchs- und/oder schadstoffsorbierende Material bereitgestellte Sorptionskapazität, insbesondere Adsorptionskapazität, ausreichend ist, um bei der Verwendung des erfindungsgemäßen Schaumstoffmaterials aus der Umgebung stammende Emissionen von Schad- und/oder Geruchsstoffen dauerhaft adsorptiv zu binden und/oder zu entfernen.

Im allgemeinen kann das erfindungsgemäße mattenförmige Schaumstoffmaterial das geruchs- und/oder schadstoffsorbierende Material in weiten Mengenbereichen enthalten. Üblicherweise enthält das erfindungsgemäße Schaumstoffmaterial das geruchs- und/oder schadstoffsorbierende Material in Mengen von 30 bis 90 Gew.-%, insbesondere 40 bis 85 Gew.-%, vorzugsweise 50 bis 80 Gew.-%, besonders bevorzugt 55 bis 80 Gew.-%, bezogen auf das Schaumstoffmaterial; hierdurch wird eine sehr hohe Adsorptionskapazität und eine effiziente Leistungsfähigkeit des erfindungsgemäßen Schaumstoffmaterials erreicht. Dennoch kann es anwendungsbezogen oder einzelfallbedingt erforderlich sein, von den vorgenannten Werten abzuweichen, ohne daß der Rahmen der vorliegenden Erfindung verlassen ist.

Das Schaumstoffmaterial nach der vorliegenden Erfindung weist im allgemeinen ein Gesamtflächengewicht von 1.500 bis 8.000 g/m², insbesondere 2.000 bis 6.000 g/m², vorzugsweise 2.500 bis 5.000 g/m², auf.

Trotz der hohen Beladungsdichte mit geruchs- und/oder schadstoffsorbierendem Material weist das erfindungsgemäße Schaumstoffmaterial eine hohe Luftdurchlässigkeit, nachfolgend ausgedrückt als Druckabfall, auf, was der Effizienz in bezug auf die Luftreinigung und/oder Luftfiltration zugute kommt. Üblicherweise weist das Schaumstoffmaterial nach der vorliegenden Erfindung einen Druckabfall, insbesondere bestimmt nach DIN ISO 11155-1,
- von höchstens 15 Pa, insbesondere 10 Pa, vorzugsweise höchstens 5 Pa, bei einer Anströmgeschwindigkeit von 0,35 m/s und/oder
- von höchstens 30 Pa, insbesondere 25 Pa, vorzugsweise höchstens 15 Pa, bei einer Anströmgeschwindigkeit von 0,7 m/s und/oder
- von höchstens 50 Pa, insbesondere 40 Pa, vorzugsweise höchstens 25 Pa, bei einer Anströmgeschwindigkeit von 1 m/s und/oder
- von höchstens 100 Pa, insbesondere 80 Pa, vorzugsweise höchstens 50 Pa, bei einer Anströmgeschwindigkeit von 1,5 m/s
auf.

Auch die Sorptionsleistung, insbesondere Adsorptionsleistung, des erfindungsgemäßen Schaumstoffmaterials ist ausgezeichnet. So ist das erfindungsgemäße Schaumstoffmaterial durch die folgende Sorptionsleistung, insbesondere Adsorptionsleistung, in bezug auf Toluol gekennzeichnet, wenn es mit einem 10 ppm Toluol enthaltenden Luftstrom bei 23 °C, bei 50 % relativer Luftfeuchtigkeit und bei 0,35 m/s Anströmgeschwindigkeit beaufschlagt wird, insbesondere bestimmt nach DIN ISO 11155-2:
- Anfangsdurchbruch: < 5 %, insbesondere < 2 %, vorzugsweise < 1 %, und/oder
- Zeitdauer bis du einem Durchbruch von 10 %: > 10 h, insbesondere > 15 h, vorzugsweise > 20 h, und/oder
- Zeitdauer bis du einem Durchbruch von 50 %: > 15 h, insbesondere > 18 h, vorzugsweise > 25 h.

Weiterhin ist das erfindungsgemäße Schaumstoffmaterial durch folgende Sorptionsleistung, insbesondere Adsorptionsleistung, in bezug auf Toluol gekennzeichnet, gemessen an einem 10 ppm Toluol enthaltenden Luftstrom bei 23 °C, bei 50 % relativer Luftfeuchtigkeit und bei 0,73 m/s Anströmgeschwindigkeit, insbesondere bestimmt nach DIN ISO 11155-2:
- Anfangsdurchbruch: < 10%, insbesondere < 5%, vorzugsweise < 2 %, und/oder
- Zeitdauer bis du einem Durchbruch von 10 %: > 1 h, insbesondere > 5 h, vorzugsweise > 10 h, und/oder
- Zeitdauer bis du einem Durchbruch von 50 %: > 5 h, insbesondere > 10 h, vorzugsweise > 17 h.

Im allgemeinen werden als Sorptionspartikel poröse Sorptionspartikel eingesetzt, d. h. solche Sorptionspartikel, welche Poren zur Aufnahme und/oder Speicherung, insbesondere Adsorption, von Geruchs- und/oder Schadstoffen aufweisen, d. h. die erfindungsgemäß eingesetzten Sorptionspartikel weisen mit anderen Worten eine poröse Struktur auf, welche sie befähigen, Geruchs- und/oder Schadstoffe aufzunehmen bzw. zu speichern, insbesondere zu adsorbieren.

Wie zuvor beschrieben ist das geruchs- und/oder schadstoffsorbierende Material, welches nach der vorliegenden Erfindung eingesetzt wird, teilchenförmig, insbesondere kornförmig, vorzugsweise kugelförmig, ausgebildet.

Die kornförmig, insbesondere kugelförmig, ausgebildeten Sorptionspartikel weisen dabei insbesondere mittlere Partikeldurchmesser im Bereich von 0,01 bis 2,0 mm, insbesondere 0,05 bis 1,0 mm, vorzugsweise 0,1 bis 0,8 mm, auf.

Wie die Anmelderin überraschenderweise herausgefunden hat, sind im Hinblick auf eine gute Adsorptionsleistung, insbesondere Adsorptionseffizienz und -kinetik, und ein gutes Durchbruchverhalten nicht nur der Porendurchmesser des als Träger verwendeten offenporigen bzw. offenzelligen Schaums bzw. Schaumsstoffs und der Partikeldurchmesser der Sorptionspartikel von Bedeutung, sondern auch deren Verhältnis zueinander. Überraschenderweise werden eine besonders gute Adsorptionsleistung, insbesondere Adsorptionseffizienz und -kinetik, und ein besonders gutes Durchbruchverhalten gerade dann erhalten, wenn das Verhältnis von mittlerem Porendurchmessers des als Träger verwendeten offenporigen bzw. offenzelligen Schaums bzw. Schaumsstoffs zu mittlerem Partikeldurchmesser der Sorptionspartikel im Bereich von 1.5 bis 7 liegt.

Das Sorptionsmittel kann insbesondere ausgewählt ein aus der Gruppe von Aktivkohle; Zeolithen; anorganischen Oxiden, insbesondere Lithiumdioxid, Silicagelen und Aluminiumoxiden; Molekularsieben, mineralischen Granulaten; Klathraten; sowie deren Mischungen.

Das erfindungsgemäß bevorzugt eingesetzte schadstoff- und/oder geruchsadsorbierende Material ist Aktivkohle, d. h. das geruchs- und/oder schadstoffsorbierende Material bzw. das Sorptionsmittel ist vorteilhafterweise auf Basis von Aktivkohle ausgebildet.

Wie zuvor beschrieben, ist gemäß einer bevorzugten Ausführungsform der vorliegenden Erfindung das erfindungsgemäß eingesetzte geruchs- und/oder schadstoffsorbierende Material partikel- bzw. teilchenformig, insbesondere kornförmig, vorzugsweise kugelförmig, ausgebildet. Dennoch kommen auch andere Erscheinungsformen, wie beispielsweise Fasern, wie z. B. Aktivkohlefasern, oder pulverförmige Aktivkohle etc. in Betracht.

Erfindungsgemäß bevorzugt ist es jedoch, wenn das geruchs- und/oder schadstoffsorbierende Material als kornförmige, vorzugsweise kugelförmige, Aktivkohlepartikel ausgebildet ist, d. h. die Aktivkohle kernförmig ("Kornkohle"), vorzugsweise kugelförmig ("Kugelkohle"), ausgebildet ist. Dabei weisen die Aktivkohlekörner, vorzugsweise Aktivkohlekugeln, vorteilhafterweise mittlere Teilchendurchmesser im Bereich von 0,01 bis 2,0 mm, insbesondere 0,05 bis 1,0 mm, vorzugsweise 0,1 bis 0,8 mm, auf.

Erfindungsgemäß bevorzugt eingesetzte Aktivkohlekörner, vorzugsweise Aktivkohlekügelchen, weisen einen Berstdruck von mindestens 5 Newton, insbesondere einen Berstdruck im Bereich von 5 Newton bis 20 Newton, pro Aktivkohlekorn bzw. Aktivkohlekügelchen auf.

Um eine hohe Leistungsfähigkeit des erfindungsgemäßen Schaumstoffmaterials zu gewährleisten, ist es vorteilhaft, wenn das eingesetzte geruchs- und/oder schadstoffsorbierende Material, insbesondere die eingesetzte Aktivkohle, eine spezifische Oberfläche (BET) von mindestens 500 m²/g, insbesondere mindestens 750 m²/g, vorzugsweise mindestens 1.000 m²/g, besonders bevorzugt mindestens 1.200 m²/g, aufweist. Im allgemeinen weist das erfindungsgemäß eingesetzte geruchs- und/oder schadstoffsorbierende Material, insbesondere die erfindungsgemäß eingesetzte Aktivkohle, eine spezifische Oberfläche (BET) im Bereich von 500 bis 2.500 m²/g, insbesondere 750 bis 2.250 m²/g, vorzugsweise 900 bis 2.000 m²/g, besonders bevorzugt 1.000 bis 1.750 m²/g, auf. Zur BET-Methode kann beispielsweise verwiesen werden auf Römpp Chemielexikon, 10. Auflage, Georg Thieme Verlag Stuttgart/New York, Stichwort: "BET-Methode", sowie auf die dort referierte Literatur, insbesondere Winnacker-Küchler, 3. Auflage, Band 7, Seiten 93 ff., sowie Z. Annal. Chem. 238, Seiten 187 bis 193 (1968).

Um eine hohe Effizienz des erfindungsgemäßen Schaumstoffmaterials zu ermöglichen, ist es bevorzugt, wenn das eingesetzte geruchs- und/oder schadstoffsorbierende Material, insbesondere die eingesetzte Aktivkohle, eine Aktivkohle mit einem Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, ist. Im allgemeinen wird eine Aktivkohle mit einem Adsorptionsvolumen V_{ads} von 250 bis 1.000 cm³/g, insbesondere 300 bis 900 cm³/g, vorzugsweise 350 bis 750 cm³/g, eingesetzt.

Erfindungsgemäß bevorzugt ist eine Aktivkohle mit einem Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g. Im allgemeinen wird eine Aktivkohle mit einem Gesamtporenvolumen nach Gurvich von 0,50 bis 0,90 cm³/g, insbesondere 0,55 bis 0,85 cm³/g, vorzugsweise 0,60 bis 0,80 cm³/g, besonders bevorzugt 0,65 bis 0,80 cm³/g, ganz besonders bevorzugt 0,70 bis 0,75 cm³/g, eingesetzt. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Die Anmelderin hat herausgefunden, daß als Aktivkohle insbesondere eine Aktivkohle mit großem Mikroporenvolumenanteil, bezogen auf das Gesamtporenvolumen der Aktivkohle, geeignet ist. Im Rahmen der vorliegenden Erfindung wird unter dem Begriff des Mikroporenvolumens insbesondere dasjenige Porenvolumen der Aktivkohle verstanden, welches durch Poren mit einem Durchmesser von ≤ 25 Å (2,5 nm), insbesondere ≤ 20 Å (2,0 nm), bereitgestellt wird.

Die Anmelderin hat nämlich überraschenderweise herausgefunden, daß die Reduzierung der Schad- und/oder Geruchsstoffkonzentrationen besonders effizient ist, wenn der Mikroporenvolumenanteil der eingesetzten Aktivkohle besonders hoch ist. Ohne sich auf eine bestimmte Theorie festlegen zu wollen, läßt sich die besonders gute Effizienz mit einer Aktivkohle mit besonders großem Mikroporenvolumenanteil darauf zurückführen, daß die Mikroporen aufgrund ihrer nur geringen Größe sozusagen von allen Seiten bzw. Wandungen mit den zu sorbierenden bzw. adsorbierenden Molekülen in Wechselwirkung treten können. Insbesondere wird eine Aktivkohle mit einem Anteil des Mikroporenvolumens, bezogen auf das Gesamtporenvolumen der Aktivkohle, von mindestens 60 %, insbesondere mindestens 65 %, bevorzugt mindestens 70 %, eingesetzt.

Insbesondere wird in erfindungsgemäß bevorzugter Weise eine Aktivkohle mit einem aus Poren mit Porendurchmessern von ≤ 25 Å, vorzugsweise ≤ 20 Å, gebildeten Mikroporenvolumenanteil von mindestens 60 %, insbesondere mindestens 65 %, bevorzugt mindestens 70 %, bezogen auf das Gesamtporenvolumen der Aktivkohle, eingesetzt.

Eine erfindungsgemäß bevorzugt eingesetzte Aktivkohle weist ein Mikroporenvolumen, d. h. ein aus Poren mit Porendurchmessern von ≤ 20 Å gebildetes Mikroporenvolumen, nach Carbon Black von mindestens 0,40 cm³/g, insbesondere mindestens 0,45 cm³/g, vorzugsweise mindestens 0,50 cm³/g, auf. Im allgemeinen liegt dieses Mikroporenvolumen nach Carbon Black im Bereich von 0,40 bis 0,80 cm³/g, insbesondere 0,45 bis 0,75 cm³/g, vorzugsweise 0,50 bis 0,60 cm³/g.

Zu weitergehenden Einzelheiten der Bestimmung der Porenoberfläche nach Carbon Black kann beispielsweise verwiesen werden auf R. W. Magee, Evaluation of the External Surface Area of Carbon Black by Nitrogene Adsorption, Presented at the Meeting of the Rubber Division of the American Chem. Soc., Oktober 1994, z. B. referiert in: Quantachrome Instruments, AUTO-SORB-1 AS1 WinVersion 1.50, Operating Manual, P/N 05061, Quantachrome Instruments 2004, Florida, USA, Seiten 71 ff.

Aufgrund der hohen Mikroporosität der erfindungsgemäß bevorzugt eingesetzten Aktivkohle weist diese gleichermaßen einen hohen spezifischen Mikroporenoberflächenanteil auf. Der spezifische Mikroporenoberflächenanteil, d. h. der Oberflächenanteil, der auf Poren mit Porendurchmessern von ≤ 20 Å zurückgeht beträgt mindestens 70 %, insbesondere mindestens 75 %, bevorzugt mindestens 80 %, ganz besonders bevorzugt mindestens 85 %, bezogen auf die spezifische Gesamtoberfläche (BET) der Aktivkohle. Insbesondere liegt dieser Mikroporenoberflächenanteil im Bereich von 70 bis 95 %, insbesondere 75 bis 95 %, vorzugsweise 80 bis 90 %.

Die erfindungsgemäß bevorzugt eingesetzte Aktivkohle weist aufgrund ihrer Mikroporosität gleichermaßen eine große Mikroporenoberfläche auf. Insbesondere liegt die Mikroporenoberfläche nach Carbon Black (d. h. die aus Poren mit Porendurchmessern von ≤ 25 Å, vorzugsweise ≤ 20 Å, gebildete Mikroporenoberfläche) bei mindestens 400 m²/g, insbesondere mindestens 800 m²/g, vorzugsweise mindestens 1.000 m²/g, besonders bevorzugt mindestens 1.200 m²/g. Gemäß einer bevorzugten Ausführungsform liegt diese Mikroporenoberfläche im Bereich von 400 bis 1.750 m²/g, insbesondere 800 bis 1.500 m²/g, vorzugsweise 1.000 bis 1.400 m²/g, besonders bevorzugt 1.100 bis 1.300 m²/g.

Erfindungsgemäß bevorzugt wird als Aktivkohle eine mikroporöse Aktivkohle mit einem mittleren Porendurchmesser (Durchschnittsporendurchmesser) von höchstens 35 Å, vorzugsweise höchstens 30 Å, besonders bevorzugt höchstens 25 Å, eingesetzt. Insbesondere liegt dieser mittlere Porendurchmesser im Bereich von 15 bis 35 Å, insbesondere 15 bis 30 Å, vorzugsweise 15 bis 25 Å.

Was die Dichte der erfindungsgemäß bevorzugt eingesetzten Aktivkohle anbelangt, so liegt die Rohdichte der eingesetzten Aktivkohle im allgemeinen im Bereich von 700 bis 975 g/cm³, insbesondere 750 bis 950 g/cm³, vorzugsweise 800 bis 900 g/cm³. Die Schüttdichte der eingesetzten Aktivkohle liegt dagegen im Bereich von 300 bis 900 g/cm³, insbesondere 350 bis 800 g/cm³, vorzugsweise 400 bis 750 g/cm³.

Für eine besonders gute Effizienz ist es von Vorteil, wenn die eingesetzte Aktivkohle eine Gesamtporosität von 40 bis 70 %, insbesondere 45 bis 65 %, vorzugsweise 50 bis 60 %, aufweist.

Erfindungsgemäß bevorzugt wird als Aktivkohle eine Aktivkohle mit einem spezifischen Gesamtporenvolumen im Bereich von 0,1 bis 2,5 cm³/g, insbesondere 0,2 bis 2,0 cm³/g, vorzugsweise 0,3 bis 1,5 cm³/g, besonders bevorzugt 0,4 bis 1,0 cm³/g, eingesetzt. Dabei liegt der Anteil an Poren mit Porendurchmessern von ≤ 36 Å bei mindestens 65 %, insbesondere mindestens 70 %, vorzugsweise mindestens 75 %, und kann Werte bis zu 95 %, insbesondere bis zu 90 %, erreichen.

Eine erfindungsgemäß besonders geeignete mikroporöse Aktivkohle, welche die vorgenannten Eigenschaften und Spezifikationen erfüllt, wird beispielsweise von der Blücher GmbH, Erkrath, Deutschland, oder von der AdsorTech GmbH, Premnitz, Deutschland, vertrieben.

Zur Steigung der Adsorptionsleistung kann die erfindungsgemäß eingesetzte Aktivkohle mit einer Imprägnierung versehen werden. Dies ist dem Fachmann als solches bekannt.

Eine derartige Imprägnierung kann beispielsweise ausgewählt sein aus der Gruppe von
(i) Metallen, vorzugsweise Kupfer, Silber, Cadmium, Platin, Palladium, Rhodium, Zink, Quecksilber, Titan, Zirkonium, Molybdän und/oder Aluminium, insbesondere deren Ionen und/oder Salzen;
(ii) Enzymen;
(iii) basischen Verbindungen, insbesondere organischen Basen, wie organischen Aminen;
(iv) sauren Verbindungen, insbesondere salz- und schwefelsauren Verbindungen oder freien organischen oder anorganischen Säuren;
sowie Mischungen der vorgenannten Imprägnierungen.

Für den Fall, daß eine mit einer Imprägnierung versehene Aktivkohle verwendet wird, wird die Imprägnierung im allgemeinen in einer Menge, bezogen auf die Aktivkohle, von 0,01 bis 30 Gew.-%, vorzugsweise 0,1 bis 20 Gew.-%, besonders bevorzugt 1 bis 15 Gew.-%, ganz besonders bevorzugt 1 bis 10 Gew.-%, auf die Aktivkohle aufgebracht.

Die vorgenannten Imprägnierverbindungen ermöglichen zum Teil die katalytische Zersetzung bestimmter Geruchs- und/oder Schadstoffe bzw. deren beschleunigten Abbau bzw. deren beschleunigte Adsorption.

Weitere vorteilhafte Eigenschaften, Aspekte und Merkmale der vorliegenden Erfindung ergeben sich aus der folgenden Beschreibung von in den Figuren dargestellten Ausführungsbeispielen. Es zeigt:

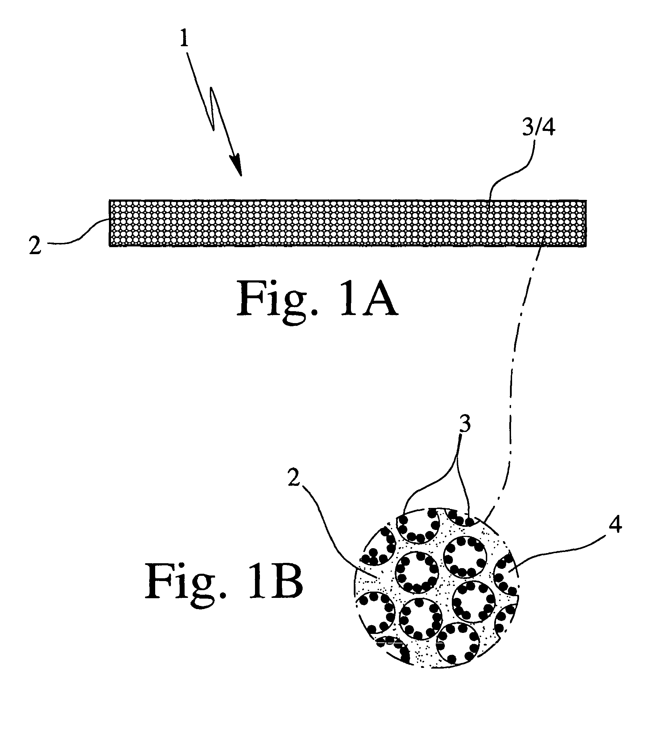

- Fig. 1A: eine schematische Schnittdarstellung durch ein erfindungsgemäßes Schaumstoffmaterial gemäß einer Ausführungsform der vorliegen- den Erfindung; und
- Fig. 1B: einen vergrößerten Ausschnitt durch den Schichtaufbau des erfin- dungsgemäßen Schaumstoffmaterials gemäß Fig. 1A.

Fig. 1A zeigt eine schematische Schnittdarstellung durch ein erfindungsgemäßes mattenförmiges Schaumstoffmaterial 1, welches sich insbesondere zu Zwecken der Luftreinigung und/oder Luftfiltration, vorzugsweise zum Einbau in Decken und Deckensysteme, Wände und Wandsysteme, Klimatisierungseinrichtungen, Lüftungsschächte, als Baumaterial oder dergleichen, eignet.

Wie sich aus dem Vergrößerungsausschnitt Fig. 1B ergibt, weist das erfindungsgemäße mattenförmige Schaumstoffmaterial 1 einen gasdurchlässigen, insbesondere luftdurchlässigen, mattenförmigen dreidimensionalen Träger 2 auf, wobei der Träger 2 als offenzelliger oder offenporiger Schaum, insbesondere Schaumstoff, ausgebildet ist. In den Träger 2 ist ein geruchs- und/oder schadstoffsorbierendes Material 3 aufgenommen oder vorgesehen, wobei das geruchs- und/oder schadstoffsorbierende Material 3 als geruchs- und/oder schadstoffsorbierendes, insbesondere geruchs- und/oder schadstoffadsorbierendes Sorptionsmittel auf Basis konkreter Sorptionspartikel ausgebildet ist, wobei die Sorptionspartikel an dem Träger 2, insbesondere an den Wandungen der Zellen oder Poren 4 des Schaums, insbesondere Schaumstoffs, fixiert sind.

Für weitergehende Einzelheiten zu dem in den Figuren dargestellten Ausführungsbeispiel kann auf die obigen allgemeinen Ausführungen zu dem erfindungsgemäßen Schaumstoffmaterial nach der vorliegenden Erfindung verwiesen werden, welche in bezug auf das in den Figuren dargestellte Ausführungsbeispiel gleichermaßen gelten.

Mit dem erfindungsgemäßen Schaumstoffmaterial sind eine Vielzahl von Vorteilen verbunden, welche nachfolgend nur ansatzweise wiedergegeben werden können:

Das Schaumstoffmaterial nach der vorliegenden Erfindung ermöglicht eine vielfältige, universelle Anwendbarkeit in bezug auf Beseitigung von Emissionen von Schad- und/oder Geruchsstoffen, insbesondere mittels Adsorption. Wie nachfolgend noch geschildert, läßt sich das Schaumstoffmaterial nach der vorliegenden Erfindung nahezu beliebig für universelle Anwendungsmöglichkeiten einsetzen, so z. B. zur Beseitigung von Emissionen von Schad- und/oder Geruchsstoffen in geschlossenen Räumen, Gebäuden, Fahrzeugen etc.

Wie zuvor beschrieben, stellt das erfindungsgemäße Schaumstoffmaterial eine hohe Adsorptionskapazität in bezug auf Emissionen von Schad- und Geruchsstoffen zur Verfügung. Dabei kann nach Erschöpfung der Adsorptionskapazität ohne weiteres eine Regenerierung erfolgen, indem das gesamte Schaumstoffmaterial einer thermischen Desorptionsbehandlung unterzogen wird. Auf diese Weise läßt sich das Schaumstoffmaterial nach der vorliegenden Erfindung nach seiner Verwendung ohne weiteres rezyklieren. Die durch das erfindungsgemäßen Schaumstoffmaterial bereitgestellte Adsorptionskapazität ist aber im allgemeinen derart groß, daß eine Erschöpfung der Adsorptionskapazität allenfalls erst nach sehr langer Anwendungsdauer zu erwarten ist, sofern überhaupt.

Wie zuvor beschrieben, ermöglicht das erfindungsgemäße Schaumstoffmaterial universelle Anwendungsmöglichkeiten.

Gegenstand der vorliegenden Erfindung - gemäß einem **zweiten** Aspekt der vorliegenden Erfindung - ist somit die Verwendung des zuvor beschriebenen erfindungsgemäßen Schaumstoffmaterials zur Beseitigung von Emissionen von Schad- und/oder Geruchsstoffen, insbesondere mittels Adsorption, insbesondere in geschlossenen Räumen, Gebäuden, Fahrzeugen etc.

So eignet sich das Schaumstoffmaterial nach der vorliegenden Erfindung beispielsweise zur Entfernung von Schad- und/oder Geruchsstoffen in schad- und/oder geruchsstoffbelasteten Räumen.

Weiterhin eignet sich das Schaumstoffmaterial nach der vorliegenden Erfindung zur Raumluftverbesserung und/oder zur Verbesserung des Raumklimas.

Die Beseitigung der Emissionen von Schad- und/oder Geruchsstoffen kann zu Zwecken der bloßen Entfernung von Schad- und/oder Geruchsstoffen in schad- und/oder geruchsstoffbelasteten Räumen, zu Zwecken der Sanierung schad- und/oder geruchsstoffbelasteter Räume oder zu Zwecken der Raumluftverbesserung bzw. zur Verbesserung des Raumklimas erfolgen. Hier kann aber auch ein Bautenschutz erfolgen, insbesondere zur Verhinderung der Kontaminierung eines Bauwerks mit in die Raumluft abgegebenen Schad- und/oder Giftstoffen (z. B. bei chemischen Reinigungsbetrieben, chemischen Anlagen, Laboratorien etc.).

Beispielsweise kann das erfindungsgemäße Schaumstoffmaterial zur Raumluftreinigung und/oder Raumluftfiltration, insbesondere in Räumen für die Halbleiterherstellung, eingesetzt werden.

Weiterhin kann das mattenförmige Schaumstoffmaterial nach der vorliegenden Erfindung zum Einbau in Deckensysteme, Wände und Wandsysteme, Klimatisierungseinrichtungen (z. B. Klimaanlagen), Lüftungsschächte, als Baumaterial oder dergleichen eingesetzt werden.

Wie zuvor beschrieben, ermöglicht das erfindungsgemäße mattenförmige Material aufgrund seiner Universalität und aufgrund seines Adsorptionsvermögen, insbesondere im Hinblick auf seine Adsorptionseffizienz, ein weites Anwendungsspektrum. So läßt sich das erfindungsgemäße mattenförmige Schaumstoffmaterial beispielsweise zur Luftfiltration in Kfz-Fahrgastzellen oder in Flugzeugen zur Anwendung bringen. Auch eignet sich das erfindungsgemäße mattenförmige Schaumstoffmaterial beispielsweise zur Geruchs- und/oder Schadstoffreinigung in Gebäuden oder im Hinblick auf den Umweltschutz. Infolge der hohen Beladung mit den Sorptionspartikeln wird eine hohe Leistungsfähigkeit des erfindungsgemäßen Schaumstoffinaterials bereitgestellt. Infolge der hohen Luftdurchlässigkeit des Trägers wird eine hohe Filtrationseffizienz erreicht. Aufgrund seiner Vielseitigkeit läßt sich das mattenförmige Schaumstoffmaterial nach der vorliegenden Erfindung in vielfachen Formgebungen (rund, eckig etc.) zu Anwendung bringen und ermöglicht somit einen universellen Einbau.

Gleichermaßen ist das erfindungsgemäße Schaumstoffmaterial auch für mobile Filtrationsanwendungen geeignet. Darüber hinaus eignet es sich gleichermaßen für stationäre Anwendungen der zuvor beschriebenen Art.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausftihrungsbeispielen veranschaulicht, welche die vorliegende Erfindung jedoch keinesfalls beschränken.

### Ausführungsbeispiele:

### Ausführungsbeispiel 1: Herstellung erfindungsgemäßer mattenförmiger Schaumstoffmaterialien mit adsorptiven Eigenschaften mit mikroporöser Aktivkohle als Sorptionspartikel

Ein ca. 20 mm dicker retikulierter offenporiger (offenzelliger) Polyurethanschaumstoff mit den Abmessungen 20 cm x 20 cm und einer Porigkeit (Porosität) von ca. 12 bis 14 ppi (mittlerer Zellen- bzw. Porendurchmesser des Schaumstoffs: ca. 2 mm) sowie einer Dichte von ca. 40 kg/m³ wird mit einem isocyanatreaktiven Polyurethanklebstoff abgequetscht (Abquetscheffekt: 100 %) und nachfolgend mit variierenden Mengen von Sorptionspartikeln beladen (Ausführungsbeispiel 1A: 30 Gew.-%; Ausführungsbeispiel 1B: 40 Gew.-%; Ausführungsbeispiel 1C: 55 Gew.-%; Ausführungsbeispiel 1D: 70 Gew.-%; Ausführungsbeispiel 1E: 80 Gew.-%, wobei alle Gewichtsprozentangaben auf das Gesamtmaterial bezogen sind).

Als geruchs- bzw. schadstoffadsorbierendes Material dient eine teilchenförmige Aktivkohle in Form von Aktivkohlekugeln, wie sie von der Blücher GmbH, Erkrath, und der Adsor-Tech, Premnitz, kommerziell erhältlich ist (Produktdaten der eingesetzten mikroporösen Aktivkohlekügelchen: mittlerer Durchmesser der Aktivkohlekugeln ca. 0,55 mm, BET-Oberfläche ca. 1.580 m²/g, Adsorptionsvolumen V_{ads} ca. 430 cm³/g, Mikroporenvolumenanteil ≥ 60 %, Gesamtporenvolumen nach Gurvich ≥ 0,70 cm³/g, spezifischer Mikroporenoberflächenanteil ≥ 80 %, Mikroporenoberfläche nach Carbon Black ca. 1.280 m³/g, mittlerer Porendurchmesser ≤ 20 Å, Gesamtporosität ca. 55 %, Berstdruck pro Aktivkugel ca. 10 Newton, Iodzahl ≥ 1.400 mg/g und Butanadsorption ≥ 35 %).

Das Ganze wird zur reaktiven Vernetzung des Klebstoffs zunächst bei 100 °C für eine Stunde und nachfolgend bei Raumtemperatur an Luft für fünf Stunden aushärten gelassen, so daß ein ausgehärtetes Schaumstoffmaterial resultiert, an dessen Porenwandungen die Aktivkohlepartikel fixiert sind.

Es resultieren erfindungsgemäße mattenförmige Schaumstoffmaterialien mit adsorptiven Eigenschaften, welche mit unterschiedlichen Mengen an mikroporösen Aktivkohlepartikeln (Ausführungsbeispiele 1A bis 1 E) beladen sind.

### Ausführungsbeispiel 2: Herstellung erfindungsgemäßer mattenförmiger Schaumstoffmaterialien mit adsorptiven Eigenschaften mit meso-/makroporöser Aktivkohle als Sorptionspartikel (nicht nach Anspruch 1)

Ausführungsbeispiel 1 wird wiederholt, wobei jedoch abweichend von Ausführungsbeispiel 1 eine andere Aktivkohle eingesetzt wurde, welche deutlich weniger mikroporös ist und grobkörniger ist, d. h. über größere Teilchendurchmesser verfügt (Produktdaten der eingesetzten meso-/makroporösen Aktivkohlekügelchen: mittlerer Durchmesser der Aktivkohlekugeln ca. 1,5 mm, BET-Oberfläche ca. 1.500 m²/g, Adsorptionsvolumen V_{ads} ca. 480 cm³/g, Mikroporenvolumenanteil ≤ 40 %, spezifischer Mikroporenoberflächenanteil ≤ 30 %, mittlerer Porendurchmesser ≥ 40 Å, Gesamtporosität ca. 50 %, Berstdruck pro Aktivkugel ca. 1 Newton, Iodzahl ≤ 1.000 mg/g, Butanadsorption ≤ 20 %). Die eingesetzte Aktivkohle ist gleichermaßen kommerziell verfügbar (z. B. von der Fa. Kureha oder der Fa. Rohm & Haas Company).

Es resultieren mattenförmige Schaumstoffmaterialien mit adsorptiven Eigenschaften, welche im Unterschied zu Ausführungsbeispiel 1 mit einer grobkörnigeren Aktivkohle mit höherem Meso- und Makroporenvolumenanteil und Meso- und Makroporenoberflächenanteil beladen sind.

### Ausführungsbeispiel 3: Durchführung verschiedener physikochemischer Messungen und Auswertung

An den erfindungsgemäßen Schaumstoffmaterialien, wie sie in den zuvor beschriebenen Ausführungsbeispielen 1 und 2 hergestellt worden sind, werden verschiedene Messungen im Hinblick auf die Adsorptionseffizienz und verschiedene physikochemische Daten durchgeführt, wie sie im folgenden in der nachstehenden Tabelle zusammengefaßt sind.

Es fällt auf, daß durch die Verwendung einer feinkörnigen mikroporösen Aktivkohle in den vorgenannten Mengenverhältnissen (Ausführungsbeispiel 1) eine deutlich gesteigerte Adsorptionseffizienz gegenüber der Verwendung einer grobkörnigen meso-/makroporösen Aktivkohle erreicht werden kann. Die mit den grobkörnigeren Aktivkohlepartikeln erreichten Ergebnisse sind aber immer noch ausreichend, obwohl die mit der mikroporösen Aktivkohle erhaltenen Adsorptionsleistungen deutlich gesteigert sind.

Die Ausführungsbeispiele belegen, daß sich durch die Auswahl einer mikroporösen Aktivkohle sowie die Einstellung des Verhältnisses von mittlerem Porendurchmesser des Schaumstoffs zu mittlerem Partikeldurchmesser der Sorptionspartikel die Adsorptionseffizienz, insbesondere die Adsorptionskinetik sowie die -leistung, und die Filtrationseffizienz gezielt steuern lassen. Die Beispiele zeigen auch, daß ein Beladungsoptimum im Hinblick auf die Sorptionspartikel im Bereich von 40 bis 80 Gew.-% erreicht wird.

**Tabelle:**

| **Beispiel** | **1A** | **1B** | **1C** | **1D** | **1E** | **2A** | **2B** | **2C** | **2D** | **2E** |
|---|---|---|---|---|---|---|---|---|---|---|
| **Druckabfall** | | | | | | | | | | |
| Druckabfall (ISO 11155-1) | <8 | <8 | <10 | <10 | <10 | <15 | <15 | <18 | <20 | <20 |
| bei 0,35 m/s [Pa] | | | | | | | | | | |
| Druckabfall (ISO 11155-1) | < 20 | < 22 | <25 | <25 | <25 | <25 | <25 | <28 | < 30 | <30 |
| bei 0,7 m/s [Pa] | | | | | | | | | | |
| Druckabfall (ISO 11155-1) | <35 | < 37 | <40 | <40 | <40 | <40 | <43 | <45 | <47 | <47 |
| bei 1,0 m/s [Pa] | | | | | | | | | | |
| Druckabfall (ISO 11155-1) | <70 | <75 | <80 | <80 | <80 | <85 | <85 | <90 | < 95 | <95 |
| bei 1,5 m/s [Pa] | | | | | | | | | | |
| **Toluoladsorptionsleistung** | | | | | | | | | | |
| (ISO 11155-2, 10 ppm Toluol, 23 °C, 50 % rel. Feuchte) | | | | | | | | | | |
| Anfangsdurchbruch bei 0,35 m/s) [%] | <10 | <5 | <2 | <1 | <1 | <20 | <15 | <15 | <9 | <7 |
| Anfangsdurchbruch bei 0,73 m/s) [%] | <15 | <10 | <3 | <1 | <1 | <25 | <20 | <15 | <9 | <8 |
| Zeitdauer bis 10% Durchbruch [h] bei 0,35 m/s | >5 | >7 | >10 | >12 | >15 | >2 | >4 | >5 | >7 | >10 |
| Zeitdauer bis 50 % Durchbruch [h] bei 0,35 m/s | >12 | >15 | >18 | >20 | >20 | >5 | >7 | >8 | >10 | >15 |
| Zeitdauer bis 10% Durchbruch [h] bei 0,73 m/s | > 4 | >5 | >9 | >10 | >12 | >1 | >3 | >3 | >5 | >6 |
| Zeitdauer bis 50 % Durchbruch [h] bei 0,73 m/s | > 10 | >12 | >15 | >17 | >17 | >3 | >5 | >6 | >10 | >12 |
| **Entflammbarkeit (DIN 53438, Teile 2 und 3)** | | | | | | | | | | |
| Entflammbarkeit Rand [Klasse] | K1 | K1 | K1 | K1 | K1 | K1 | K 1 | K1 | K 1 | K1 |
| Entflammbarkeit übriges Material (Fläche) [Klasse] | F 1 | F 1 | F 1 | F 1 | F 1 | F 1 | F 1 | F 1 | F 1 | F 1 |
| Verhältnis mittlerer Porendurchmesser Schaumstoff zu mittlerer Partikeldurchmesser Aktivkohle | ca. 3,6 | ca. 3,6 | ca. 3,6 | ca. 3,6 | ca. 3,6 | ca. 1,3 | ca. 1,3 | ca. 1,3 | ca. 1,3 | ca. 1,3 |

## Patentansprüche

1. Mattenförmiges Schaumstoffmaterial (1), insbesondere zu Zwecken der Luftreinigung und/oder Luftfiltration, vorzugsweise zum Einbau in Decken und Deckensysteme, Wände und Wandsysteme, Klimatisierungseinrichtungen, Lüftungsschächte, als Baumaterial oder dergleichen,
wobei das Schaumstoffinaterial (1) einen gasdurchlässigen, insbesondere luftdurchlässigen, mattenförmigen dreidimensionalen Träger (2) umfaßt, wobei der Träger (2) als offenzelliger oder offenporiger Schaum, insbesondere Schaumstoff, ausgebildet ist,
wobei in den Träger (2) ein geruchs- und/oder schadstoffsorbierendes Material (3) aufgenommen oder vorgesehen ist, wobei das geruchs- und/oder schadstoffsorbierende Material (3) als geruchs- und/oder schadstoffsorbierendes, insbesondere geruchs- und/oder schadstoffadsorbierendes Sorptionsmittel auf Basis diskreter kornförmiger Sorptionspartikel mit einem mittleren Partikeldurchmesser im Bereich von 0,01 bis 2,0 mm in Form von Aktivkohle ausgebildet ist, wobei die Sorptionspartikel an dem Träger (2), insbesondere an den Wandungen der Zellen oder Poren (4) des Schaums, insbesondere Schaumstoffs, fixiert sind und die Aktivkohle einen aus Poren mit Porendurchmessern von ≤ 20 Å gebildeten Mikroporenvolumenanteil von mindestens 60 % aufweist, und
wobei das Verhältnis von mittlerem Porendurchmesser des als Träger (2) verwendeten offenzelligen oder offenporigen Schaums, insbesondere Schaumstoffs, zu mittlerem Partikeldurchmesser der Sorptionspartikel im Bereich von 1,5 bis 7 liegt.

2. Schaumstoffmaterial nach Anspruch 1, **dadurch** gekenntzeichnet, daß der Träger (2) ein insbesondere offenporiger und/oder offenzelliger Schaum, insbesondere Schaumstoff, auf Basis mindestens eines organischen Polymers, insbesondere auf Basis von Polyurethanen, Polyolefinen, Polystyrolen, Polyvinylchloriden, Polyisocyanuraten und Formaldehydharzen, besonders bevorzugt ein Polyurethanschaumstoff, ist.

3. Schaumstoffmaterial nach Anspruch 1 oder 2, **dadurch gekennzeichnet, daß** der Träger (2) ein insbesondere offenporiger und/oder offenzelliger Schaumstoff auf Polyurethanbasis (PU-Schaumstoff) oder Polyolefinbasis (PO-Schaumstoff), insbesondere ein vorzugsweise großporiger retikulierter Polyurethanschaumstoff, ist und/oder daß der Träger (2) ein offenporiger und/oder ein offenzelliger Schaum, insbesondere Schaumstoff, mit einem mittleren Porendurchmesser von 1 bis 5 mm, bevorzugt 1,5 bis 3 mm, ist.

4. Schaumstoffmaterial nach einem der vorangehenden Ansprüche, **dadurch gekennzeichnet, daß** der Träger (2), insbesondere Schaum oder Schaumstoff, versteift und/oder ausgehärtet ist, vorzugsweise durch insbesondere thermische und/oder chemische Aushärtung.

5. Schaumstoffmaterial nach Anspruch 4, **dadurch gekennzeichnet, daß** der Träger (2), insbesondere Schaum oder Schaumstoff, mit einem chemischen Aushärtungsmittel getränkt und nachfolgend ausgehärtet ist, insbesondere wobei das Aushärtungsmittel ein Klebstoff oder eine anderweitige Haftmasse ist, welche gleichermaßen zur Fixierung der Sorptionspartikel dient.

6. Schaumstoffmaterial nach einem der vorangehenden Ansprüche, **dadurch gekennzeichnet, daß** die Sorptionspartikel mittels einer Haftmasse, insbesondere eines Klebstoffs, an dem Träger (2) fixiert sind.

7. Schaumstoffmaterial nach einem der vorangehenden Ansprüche, **dadurch gekennzeichnet, daß** das geruchs- und/oder schadstoffsorbierende Material (3) kugelförmig ausgebildet ist und/oder daß die Sorptionspartikel kugelförmig ausgebildet sind, insbesondere wobei der mittlere Partikeldurchmesser im Bereich von 0,05 bis 1,0 mm, vorzugsweise 0,1 bis 0,8 mm, liegt und/oder daß das Verhältnis von mittlerem Porendurchmesser des als Träger (2) verwendeten offenzelligen oder offenporigen Schaums, insbesondere Schaumstoffs, zu mittlerem Partikeldurchmesser der Sorptionspartikel im Bereich von 1,5 bis 6, vorzugsweise 1,7 bis 5, besonders bevorzugt 2 bis 4, liegt.

8. Schaumstoffmaterial nach einem der vorangehenden Ansprüche, **dadurch gekennzeichnet, daß** das geruchs- und/oder schadstoffsorbierende Material (3) eine Aktivkohle mit einem aus Poren mit Porendurchmessern von ≤ 20 Å gebildeten Mikroporenvolumenanteil von mindestens 65 %, bevorzugt mindestens 70 %, bezogen auf das Gesamtporenvolumen, ist.

9. Schaumstoffmaterial nach einem der vorangehenden Ansprüche, **dadurch gekennzeichnet, daß** das geruchs- und/oder schadstoffsorbierende Material (3) eine Aktivkohle mit einem Mikroporenvolumen, insbesondere einem aus Poren mit Porendurchmessern von ≤ 20 Å gebildeten Mikroporenvolumen, nach Carbon Black von mindestens 0,40 cm³/g, insbesondere mindestens 0,45 cm³/g, vorzugsweise mindestens 0,50 cm³/g, ist.

10. Schaumstoffmaterial nach einem der vorangehenden Ansprüche, **dadurch gekennzeichnet, daß** das geruchs- und/oder schadstoffsorbierende Material (3) eine Aktivkohle mit einem spezifischen Mikroporenoberflächenanteil, insbesondere einem aus Poren mit Porendurchmessern von ≤ 20 Å gebildeten spezifischen Mikroporenoberflächenanteil, von mindestens 70 %, insbesondere mindestens 75 %, bevorzugt mindestens 80 %, ganz besonders mindestens 85 %, bezogen auf die spezifische Gesamtoberfläche (BET) der Aktivkohle, ist.

11. Schaumstoffmaterial nach einem der vorangehenden Ansprüche, **dadurch gekennzeichnet, daß** das geruchs- und/oder schadstoffadsorbierende Material (3) eine Aktivkohle mit einer Mikroporenoberfläche nach Carbon Black, insbesondere einer aus Poren mit Porendurchmessern von ≤ 20 Å gebildete Mikroporenoberfläche, von mindestens 400 m²/g, insbesondere mindestens 800 m²/g, vorzugsweise mindestens 1.000 m²/g, besonders bevorzugt mindestens 1.200 m²/g, ist.

12. Schaumstoffmaterial nach einem der vorangehenden Ansprüche, **dadurch gekennzeichnet, daß** das geruchs- und/oder schadstoffsorbierende Material (3) eine Aktivkohle mit einem mittleren Porendurchmesser (Durchschnittsporendurchmesser) von höchstens 35 Å, vorzugsweise höchstens 30 Å, besonders bevorzugt höchstens 25 Å, ist.

13. Schaumstoffmaterial nach einem der vorangehenden Ansprüche, **dadurch gekennzeichnet, daß** das geruchs- und/oder schadstoffsorbierende Material (3) eine Aktivkohle, welche eine Imprägnierung aufweist, ist, insbesondere wobei die Imprägnierung ausgewählt ist der Gruppe von (i) Metallen, vorzugsweise Kupfer, Silber, Cadmium, Platin, Palladium, Rhodium, Zink, Quecksilber, Titan, Zirkonium, Molybdän und/oder Aluminium, insbesondere deren Ionen und/oder Salzen; (ii) Enzymen; (iii) basischen Verbindungen, insbesondere organischen Basen, wie organischen Aminen; (iv) sauren Verbindungen, insbesondere salz- und schwefelsauren Verbindungen oder freien organischen oder anorganischen Säuren; sowie deren Mischungen und/oder Kombination, und/oder insbesondere wobei die Imprägnierung, bezogen auf die Aktivkohle, in einer Menge von 0,01 bis 30 Gew.-%, vorzugsweise 0,1 bis 20 Gew.-%, besonders bevorzugt 1 bis 15 Gew.-%, ganz besonders bevorzugt 1 bis 10 Gew.-%, auf die Aktivkohle aufgebracht ist.

14. Verwendung eines mattenförmigen Schaumstoffmaterials (1) nach einem oder mehreren der vorangehenden Ansprüche zur Beseitigung von Emissionen von Schad- und/oder Geruchsstoffen insbesondere mittels Adsorption, insbesondere in geschlossenen Räumen, Gebäuden, Fahrzeugen, Flugzeugen oder dergleichen.

15. Verwendung eines Schaumstoffinaterials (1) nach einem oder mehreren der vorangehenden Ansprüche zum Einbau in Decken und Deckensysteme, Wände und Wandsysteme, Klimatisierungseinrichtungen, Lüftungsschächte, als Baumaterial oder dergleichen.

## Claims

1. Matlike foam material stock (1), in particular for purposes of air purification and/or air filtration, preferably for installation into ceilings and ceiling systems, walls and wall systems, air-conditioning devices, ventilation shafts, as building material or the like,
- where the foam material stock (1) comprises a gas-permeable, more particularly air-permeable matlike three-dimensional support (2), the support (2) being formed as an open-cell or open-pore foam, more particularly foam material,
- where provided or taken up into the support (2) is an odorant- and/or noxiant-sorbing material (3), the odorant- and/or noxiant-sorbing material (3) being formed as an odorant- and/or noxiant-sorbing, more particularly odorant- and/or noxiant-adsorbing sorbent based on discrete granular sorptive particles having an average particle diameter in the range from 0.01 to 2.0 mm in the form of activated carbon, the sorptive particles being fixed on the support (2), more particularly on the walls of the cells or pores (4) of the foam, more particularly foam material, and the activated carbon having a micropore volume fraction, formed of pores having pore diameters of ≤ 20 Å, of at least 60%, and
- where the ratio of average pore diameter of the open-cell or open-pore foam, more particularly foam material, used as support (2) to average particle diameter of the sorptive particles is in the range from 1.5 to 7.

2. Foam material stock according to Claim 1, **characterized in that** the support (2) is an - in particular - open-pore and/or open-cell foam, more particularly foam material, based on at least one organic polymer, more particularly based on polyurethanes, polyolefins, polystyrenes, polyvinyl chlorides, polyisocyanurates, and formaldehyde resins, more preferably a polyurethane foam material.

3. Foam material stock according to Claim 1 or 2, **characterized in that** the support (2) is an - in particular - open-pore and/or open-cell foam material based on polyurethane (PU foam material) or on polyolefin (PO foam material), more particularly a preferably large-pore reticulated polyurethane foam material, and/or **in that** the support (2) is an open-pore and/or open-cell foam, more particularly foam material, having an average pore diameter of 1 to 5 mm, preferably 1.5 to 3 mm.

4. Foam material stock according to any of the preceding claims, **characterized in that** the support (2), more particularly foam or foam material, is stiffened and/or cured, preferably by - in particular - thermal and/or chemical curing.

5. Foam material stock according to Claim 4, **characterized in that** the support (2), more particularly foam or foam material, is impregnated with a chemical curing agent and subsequently cured, more particularly where the curing agent is an adhesive or another bonding composition which serves equally to fix the sorptive particles.

6. Foam material stock according to any of the preceding claims, **characterized in that** the sorptive particles are fixed by means of a bonding composition, more particularly an adhesive, to the support (2).

7. Foam material stock according to any of the preceding claims, **characterized in that** the odorant- and/or noxiant-sorbing material (3) is of spherical construction and/or **in that** the sorptive particles are of spherical construction, more particularly where the average particle diameter is in the range from 0.05 to 1.0 mm, preferably 0.1 to 0.8 mm, and/or **in that** the ratio of average pore diameter of the open-cell or open-pore foam, more particularly foam material, used as support (2) to average particle diameter of the sorptive particles is in the range from 1.5 to 6, preferably 1.7 to 5, more preferably 2 to 4.

8. Foam material stock according to any of the preceding claims, **characterized in that** the odorant- and/or noxiant-sorbing material (3) is an activated carbon having a micropore volume fraction, formed of pores having pore diameters of ≤ 20 Å, of at least 65%, preferably at least 70%, based on the total pore volume.

9. Foam material stock according to any of the preceding claims, **characterized in that** the odorant- and/or noxiant-sorbing material (3) is an activated carbon having a micropore volume, more particularly a micropore volume formed of pores having pore diameters of ≤ 20 Å, by the carbon black method of at least 0.40 cm³/g, more particularly at least 0.45 cm³/g, preferably at least 0.50 cm³/g.

10. Foam material stock according to any of the preceding claims, **characterized in that** the odorant- and/or noxiant-sorbing material (3) is an activated carbon having a specific micropore surface fraction, more particularly a specific micropore surface fraction formed of pores having pore diameters of ≤ 20 Å, of at least 70%, more particularly at least 75%, preferably at least 80%, very particularly at least 85%, based on the specific total surface area (BET) of the activated carbon.

11. Foam material stock according to any of the preceding claims, **characterized in that** the odorant- and/or noxiant-adsorbing material (3) is an activated carbon having a micropore surface area by the carbon black method, more particularly a micropore surface area formed of pores having pore diameters of ≤ 20 Å, of at least 400 m²/g, more particularly at least 800 m²/g, preferably at least 1000 m²/g, more preferably at least 1200 m²/g.

12. Foam material stock according to any of the preceding claims, **characterized in that** the odorant- and/or noxiant-sorbing material (3) is an activated carbon having an average pore diameter (mean average pore diameter) of not more than 35 Å, preferably not more than 30 Å, more preferably not more than 25 Å.

13. Foam material stock according to any of the preceding claims, **characterized in that** the odorant- and/or noxiant-sorbing material (3) is an activated carbon which has an impregnation, more particularly where the impregnation is selected from the group consisting of (i) metals, preferably copper, silver, cadmium, platinum, palladium, rhodium, zinc, mercury, titanium, zirconium, molybdenum and/or aluminum, more particularly the ions and/or salts thereof; (ii) enzymes; (iii) basic compounds, more particularly organic bases, such as organic amines; (iv) acidic compounds, more particularly hydrochloric and sulfuric acid compounds or free organic or inorganic acids; and also mixtures thereof and/or combinations thereof, and/or more particularly where the impregnation, based on the activated carbon, is applied in an amount of 0.01% to 30% by weight, preferably 0.1% to 20% by weight, more preferably 1% to 15% by weight, very preferably 1% to 10% by weight, to the activated carbon.

14. Use of a matlike foam material stock (1) according to one or more of the preceding claims for eliminating emissions of noxiants and/or odorants, more particularly by means of adsorption, more particularly in enclosed spaces, buildings, vehicles, aircraft or the like.

15. Use of a foam material stock (1) according to one or more of the preceding claims for installation in ceilings and ceiling systems, walls and wall systems, air-conditioning devices, ventilation shafts, as building material or the like.

## Revendications

1. Matériau en produit alvéolaire (1) en forme de natte, en particulier en vue de l'épuration et/ou de la filtration de l'air, de préférence destiné à une incorporation dans les toitures et les systèmes de toiture, les parois et les systèmes de paroi, les dispositifs de climatisation, les puits d'aération, comme matériau de construction ou analogues,
- où le matériau en produit alvéolaire (1) comprend un support (2) tridimensionnel, perméable aux gaz, en particulier à l'air, en forme de natte, le support (2) étant réalisé sous forme d'une mousse, en particulier d'un produit alvéolaire, à cellules ouvertes ou à pores ouverts,
- où un matériau (3) de sorption des substances odoriférantes et/ou des substances nuisibles est repris ou prévu dans le support (2), le matériau (3) de sorption des substances odoriférantes et/ou des substances nuisibles étant réalisé, en tant qu'agent de sorption des substances odoriférantes et/ou des substances nuisibles, en particulier en tant qu'agent d'adsorption des substances odoriférantes et/ou des substances nuisibles, à base de particules de sorption discrètes en forme de grains présentant un diamètre moyen des particules dans la plage de 0,01 à 2,0 mm sous forme de charbon actif, les particules de sorption étant fixées sur le support (2), en particulier sur les parois des cellules ou des pores (4) de la mousse, en particulier du produit alvéolaire, et le charbon actif présentant une proportion volumique de micropores formée de pores présentant des diamètres ≤ 20 Å d'au moins 60%, et
- où le rapport du diamètre moyen des pores de la mousse, en particulier du produit alvéolaire, à cellules ouvertes ou à pores ouverts utilisé(e) comme support (2) au diamètre moyen des particules de sorption se situe dans la plage de 1,5 à 7.

2. Matériau en produit alvéolaire selon la revendication 1, **caractérisé en ce que** le support (2) est une mousse, en particulier un produit alvéolaire, en particulier à pores ouverts et/ou à cellules ouvertes à base d'au moins un polymère organique, en particulier à base de polyuréthanes, de polyoléfines, de polystyrènes, de poly(chlorures de vinyle), de polyisocyanurates et de résines de formaldéhyde, de manière particulièrement préférée un produit alvéolaire en polyuréthane.

3. Matériau en produit alvéolaire selon la revendication 1 ou 2, **caractérisé en ce que** le support (2) est un produit alvéolaire, en particulier à pores ouverts et/ou à cellules ouvertes, à base de polyuréthane (produit alvéolaire en PU) ou à base de polyoléfine (produit alvéolaire en PO), en particulier un produit alvéolaire en polyuréthane de préférence à gros pores, réticulé et/ou **en ce que** le support (2) est une mousse, en particulier un produit alvéolaire, à pores ouverts et/ou à cellules ouvertes présentant un diamètre moyen des pores de 1 à 5 mm, de préférence de 1,5 à 3 mm.

4. Matériau en produit alvéolaire selon l'une quelconque des revendications précédentes, **caractérisé en ce que** le support (2), en particulier la mousse ou le produit alvéolaire, est rigidifié et/ou durci, de préférence par un durcissement en particulier thermique et/ou chimique.

5. Matériau en produit alvéolaire selon la revendication 4, **caractérisé en ce que** le support (2), en particulier la mousse ou le produit alvéolaire, est imbibé d'un agent de durcissement chimique puis est durci, l'agent de durcissement étant en particulier un adhésif ou une autre masse autoadhésive, qui sert simultanément à la fixation des particules de sorption.

6. Matériau en produit alvéolaire selon l'une quelconque des revendications précédentes, **caractérisé en ce que** les particules de sorption sont fixées au moyen d'une masse autoadhésive, en particulier d'un adhésif, sur le support (2).

7. Matériau en produit alvéolaire selon l'une quelconque des revendications précédentes, **caractérisé en ce que** le matériau (3) de sorption des substances odoriférantes et/ou des substances nuisibles est réalisé sous forme de billes et/ou **en ce que** les particules de sorption sont réalisées sous forme de billes, le diamètre moyen des particules se situant en particulier dans la plage de 0,05 à 1,0 mm, de préférence de 0,1 à 0,8 mm, et/ou **en ce que** le rapport du diamètre moyen des pores de la mousse, en particulier du produit alvéolaire, à cellules ouvertes ou à pores ouverts, utilisé(e) comme support (2) au diamètre moyen des particules de sorption se situe dans la plage de 1,5 à 6, de préférence de 1,7 à 5, de manière particulièrement préférée de 2 à 4.

8. Matériau en produit alvéolaire selon l'une quelconque des revendications précédentes, **caractérisé en ce que** le matériau (3) de sorption des substances odoriférantes et/ou des substances nuisibles est un charbon actif présentant une proportion volumique de micropores formée par des pores présentant des diamètres ≤ 20 Å d'au moins 65%, de préférence d'au moins 70%, par rapport au volume total de pores.

9. Matériau en produit alvéolaire selon l'une quelconque des revendications précédentes, **caractérisé en ce que** le matériau (3) de sorption des substances odoriférantes et/ou des substances nuisibles est un charbon actif présentant un volume de micropores, en particulier un volume de micropores, formé par des pores présentant des diamètres ≤ 20 Å, selon Carbon Black, d'au moins 0,40 cm³/g, en particulier d'au moins 0,45 cm³/g, de préférence d'au moins 0,50 cm³/g.

10. Matériau en produit alvéolaire selon l'une quelconque des revendications précédentes, **caractérisé en ce que** le matériau (3) de sorption des substances odoriférantes et/ou des substances nuisibles est un charbon actif présentant une proportion de surface spécifique de micropores, en particulier une proportion de surface spécifique de micropores, formée par des pores présentant des diamètres ≤ 20 Å, d'au moins 70%, en particulier d'au moins 75%, de préférence d'au moins 80%, de manière tout particulièrement préférée d'au moins 85%, par rapport à la surface spécifique totale (BET) du charbon actif.

11. Matériau en produit alvéolaire selon l'une quelconque des revendications précédentes, **caractérisé en ce que** le matériau (3) d'adsorption des substances odoriférantes et/ou des substances nuisibles est un charbon actif présentant une surface de micropores selon Carbon Black, en particulier une surface de micropores formée par des pores présentant des diamètres ≤ 20 Å, d'au moins 400 m²/g, en particulier d'au moins 800 m²/g, de préférence d'au moins 1000 m²/g, de manière particulièrement préférée d'au moins 1200 m²/g.

12. Matériau en produit alvéolaire selon l'une quelconque des revendications précédentes, **caractérisé en ce que** le matériau (3) de sorption des substances odoriférantes et/ou des substances nuisibles est un charbon actif présentant un diamètre moyen des pores d'au plus 35 Å, de préférence d'au plus 30 Å, de manière particulièrement préférée d'au plus 25 Å.

13. Matériau en produit alvéolaire selon l'une quelconque des revendications précédentes, **caractérisé en ce que** le matériau (3) de sorption des substances odoriférantes et/ou des substances nuisibles est un charbon actif qui présente une imprégnation, l'imprégnation étant en particulier choisie dans le groupe (i) des métaux, de préférence le cuivre, l'argent, le cadmium, le platine, le palladium, le rhodium, le zinc, le mercure, le titane, le zirconium, le molybdène et/ou l'aluminium, en particulier leurs ions et/ou leurs sels ; (ii) des enzymes ; (iii) des composés basiques, en particulier les bases organiques, telles que les amines organiques ; (iv) des composés acides, en particulier les composés d'acide chlorhydrique et sulfurique ou les acides organiques ou inorganiques libres ; ainsi que leurs mélanges et/ou combinaison et/ou l'imprégnation, par rapport au charbon actif, étant en particulier appliquée en une quantité de 0,01 à 30% en poids, de préférence de 0,1 à 20% en poids, de manière particulièrement préférée de 1 à 15% en poids, de manière tout particulièrement préférée de 1 à 10% en poids, sur le charbon actif.

14. Utilisation d'un matériau en produit alvéolaire (1) en forme de natte selon l'une ou plusieurs des revendications précédentes pour éliminer les émissions de substances nuisibles et/ou de substances odoriférantes en particulier par adsorption, en particulier dans des espaces fermés, des bâtiments, des voitures, des avions ou analogues.

15. Utilisation d'un matériau en produit alvéolaire (1) selon l'une ou plusieurs des revendications précédentes pour l'incorporation dans des toitures et des systèmes de toiture, des parois et des systèmes de paroi, des dispositifs de climatisation, des puits d'aération, comme matériau de construction ou analogues.
